# EUROPÄISCHE PATENTSCHRIFT

(11) **EP 2 458 323 B1**
(45) Veröffentlichungstag und Bekanntmachung des Hinweises auf die Patenterteilung: **20.08.2014**
(21) Anmeldenummer: 10015029.1
(22) Anmeldetag: 26.11.2010
(51) Int. Cl.: G01B 11/16, G01B 5/00, F03D 11/00

(54) **Rotorblatt mit einer Einrichtung zur Messung der Verformung bei Belastung**
Rotor blade with a device for measuring deformation under load
Lame de rotor dotée d'un dispositif de mesure de la déformation sous une charge

(43) Veröffentlichungstag der Anmeldung: 30.05.2012
(73) Patentinhaber: Baumer Innotec AG, 8501 Frauenfeld (CH)
(72) Erfinder: Weigel, Michael, 88142 Wasserburg (DE); Tiedeke, Joachim, 8280 Kreuzlingen (DE)
(74) Vertreter: Strauss, Steffen

(56) Entgegenhaltungen:
- DE-A1- 19 810 447
- DE-C1- 10 050 656
- US-A- 5 753 808
- US-A1- 2004 174 542

## Beschreibung

### Gebiet der Erfindung

Die Erfindung bezieht sich auf ein Rotorblatt mit einer Einrichtung zur Messung der Verformung bei Belastung, insbesondere des Rotorblatts einer Windkraftanlage.

### Hintergrund der Erfindung

Rotorblätter, insbesondere Rotorblätter von Windkraftanlagen unterliegen hohen Belastungen. Diese werden in der Regel aus faserverstärkten Kunststoffen hergestellt und erfahren bei hohen Windgeschwindigkeiten einen hohen Durchbiegungsgrad. Hierdurch kann die Struktur des Rotorblatts geschädigt werden. Weiter kann es schlimmstenfalls dazu kommen, dass das gebogene Rotorblatt gegen einen Mast der Anlage stößt oder dass es sogar bricht.

Es ist daher bekannt, die Verformung, insbesondere die Biegung, eines Rotorblatts zu überwachen, um bei zu hoher Belastung durch Verstellung des Anstellwinkels des Rotorblatts die Belastung verringern zu können. Bei hohen Windgeschwindigkeiten muss die Anlage ganz abgeschaltet werden.

Eine derartige Einrichtung zur Messung der Verformung eines Rotorblatts zeigt beispielsweise die deutsche Patentschrift DE 10 2006 002 708 B4.

Dabei ist in der Nähe der Nabe des Rotorblatts eine Sender-/Empfängereinheit, bestehend aus einer Lichtquelle, vorzugsweise einer LED oder einer Laserdiode und einem ortsauflösenden, bildgebenden Sensor (beispielsweise CCD, CMOS) zusammen mit einem abbildenden System, angebracht.

Beabstandet von der Sender-/Empfängereinheit befindet sich ein Retroreflektor, insbesondere ein Tripel-Spiegel oder ein Array von Tripelspiegel, oder anderen
retroreflektierenden Lösungen, über den das vom Sender ausgestrahlte Licht auf den ortsauflösenden Sensor reflektiert wird. Anhand der Position des Lichtpunktes auf dem ortsauflösenden Sensor kann die Verformung des Rotorblatts bestimmt werden.

Der Ort der Abbildung auf dem ortsauflösenden Sensor ist dabei proportional zu den Winkeln der Reflektoren zur optischen Achse des abbildenden Systems.

Mit einem solchen System kann auf relativ einfache Weise die Durchbiegung des Rotorblatts bestimmt werden.

Es hat sich allerdings gezeigt, dass, auch wenn die Sender-/Empfängereinheit nahe an der Nabe des Rotors angeordnet ist, sich der Bereich, in dem sich die Sender-/Empfängereinheit befindet, ebenfalls verformt.

Typischerweise ist die Sender-/Empfängereinheit an einem Schott (der sog. Plattform) des Rotorblatts angeordnet, welches sich zwischen dem Flansch und dem eigentlichen Rotorblatt erstreckt. Ein derartiges Schott soll verhindern, dass größere Mengen von Wasser oder herumfliegende Teile in die Nabe des Rotors gelangen und so mechanische Schäden verursachen. In dem Bereich zwischen Nabe und Schott ist das Rotorblatt üblicherweise im Wesentlichen zylindrisch ausgebildet, besitzt also keine Blattstruktur, welche von der Luft angeströmt wird und so zur Rotation des Windrads beiträgt. Der Bereich zwischen Nabe und Schott ist daher in der Regel relativ steif.

Dennoch kann es bei, insbesondere am Schott angeordneten Sender-/Empfängereinheiten zu einer leichten Verdrehung und lateralen Verschiebung der Sender-/Empfängereinheit relativ zur Hauptachse des Rotorblatts kommen, derart, dass die Messung auf den Reflektor nicht mehr proportional zur Durchbiegung des Rotorblatts ist. Bei Verwendung eines Tripel-Spiegels reicht der vom Sender ausgehende Messbereich zwar in der Regel aus, um dennoch eine Messung vornehmen zu können.

Aufgrund der Winkelabweichung und lateralen Verschiebung der Sender-/Empfängereinheit kommt es allerdings zu einem Messfehler, der die Genauigkeit der Messung verringert.

Im Detail kommt dieser Messfehler in der Regel dadurch zustande, dass es zu einer elliptischen Verformung des im Flanschbereich in der Regel kreiszylinderförmig, also im Querschnitt rund ausgebildeten Teil des Rotorblatts, kommt. Diese Verformung führt auch zu einer Verformung des Schotts wodurch eine daran befestigte Sender-/Empfängereinheit die Ausrichtung ändert. Da das vorstehend beschriebene Messprinzip darauf beruht, eine Winkeländerung zu messen, wirkt sich die Verformung in Form eines Winkelfehlers unmittelbar als Messfehler aus.

### Aufgabe der Erfindung

Der Erfindung liegt demgegenüber die Aufgabe zugrunde, die genannten Nachteile des vorstehend beschriebenen Standes der Technik zumindest zu reduzieren.

Es ist insbesondere eine Aufgabe der Erfindung, den aufgrund einer Verformung des Rotorblatts im Flanschbereich, an welchem ein Sender und/oder Empfänger angeordnet ist, auftretenden Messfehler zumindest zu reduzieren.

### Zusammenfassung der Erfindung

Die Aufgabe der Erfindung wird bereits durch eine Einrichtung zur Messung der Verformung eines Rotorblatts, mit einer Einrichtung zur Messung der Verformung bei Belastung nach dem unabhängigen Anspruch 1 gelöst.

Bevorzugte Ausführungsform und Weiterbildungen der Erfindung sind den Unteransprüchen zu entnehmen.

Die Erfindung betrifft eine Einrichtung zur Messung der Verformung eines Rotorblatts bei Belastung, insbesondere betrifft die Erfindung ein Rotorblatt einer Windkraftanlage.

Die Einrichtung zur Messung der Verformung umfasst zumindest einen am Rotorblatt angeordneten Sensor und zumindest einen am Rotorblatt angeordneten Empfänger. Empfänger und Sensor können, wie es bei einer bevorzugten Ausführungsform der Erfindung vorgesehen ist, auch in einer Baugruppe integriert sein.

Das Messprinzip basiert darauf, dass über ein Signal eine Verschiebung eines Messpunktes gemessen wird.

Dabei ist als eine Ausführungsform vorgesehen, dass das Signal, beispielsweise Licht einer LED, von einem in Empfängernähe angeordneten Sender zu einem am Messpunkt angeordneten Reflektor läuft und von dort zum Empfänger zurück läuft. Mit beispielsweise einem als optischen Flächensensor ausgebildeten Empfänger kann eine Verschiebung des Messpunktes erfasst werden und so auf eine Verformung des Rotorblatts rückgeschlossen werden.

Bei einer alternativen Ausführungsform der Erfindung ist statt einer Sender/Empfängereinheit und einem Reflektor der Sender beabstandet vom Empfänger am Rotorblatt angeordnet. Statt über beispielweise einen Reflektor zurück reflektiert zu werden, ist so das Lichtsignal direkt auf den Empfänger gerichtet. Diese Ausführungsform der Erfindung ist zwar in der Regel etwas aufwändiger, kann bei Störeinflüssen durch Verschmutzung, Beschlag etc. aber zuverlässiger sein.

Diese alternative Ausführungsform ist auch mit der vorstehend beschriebenen Verwendung eines Reflektors kombinierbar, so kann der Reflektor beispielsweise eine zusätzliche Lichtquelle umfassen.

Sender und Empfänger sind vorzugsweise als bildgebendes System ausgebildet. Es ist aber denkbar, auch auf andere Messverfahren zurückzugreifen.

In der Regel ist die Sender-/Empfängereinheit in der Nähe der Nabe am Rotorblatt angeordnet. Insbesondere ist, wie es bei einer bevorzugten Ausführungsform der Erfindung vorgesehen ist, Sender und/oder Empfänger an einem Schott des Rotorblatts angeordnet, welches sich im Übergangsbereich des Rotorblatts vom im Wesentlichen kreiszylinderförmigen Flansch zu den anströmbaren Blattabschnitten befindet. Als in der Nähe zur Nabe angeordnet wird also im Sinne der Erfindung der Bereich verstanden, in welchem das Rotorblatt keine anströmbaren Flügel aufweist, insbesondere der Flansch, sowie der unmittelbar angrenzende Bereich.

Von dem Sender und Empfänger beabstandet ist am Rotorblatt ein Reflektor angebracht, welcher das vom Sender ausgestrahlte Signal, insbesondere das Licht einer Leuchtdiode, zurückwirft.

Anhand des reflektierten Signals, insbesondere anhand der Position eines reflektierten Lichtpunktes auf einem Flächensensor kann die Verformung beziehungsweise Durchbiegung des Rotorblatts bestimmt werden.

Gemäß der Erfindung ist Sender und/oder Empfänger über eine Halterung an dem Rotorblatt, insbesondere am Schott des Rotorblatts angebracht, welche eine Verformung des Rotorblatts in dem Bereich, in welchem die Halterung angebracht ist, kompensiert.

Unter einer Kompensation im Sinne der Erfindung wird verstanden, dass die Halterung sich Formänderungen des Rotorblatts anpassen kann, ohne dass sich dabei die Position des Senders oder Empfängers, insbesondere der Winkel des Senders oder Empfängers ändert. Die Halterung ist derart ausgebildet, dass sie Änderungen des Durchmessers des Rotorblatts folgen kann.

Weiter kann die Halterung, wie es bei einer bevorzugten Ausführungsform der Erfindung vorgesehen ist, an einer Stelle befestigt sein, welche in Bezug auf winkelabhängiges Messsystem den Koordinatenursprung bildet. Bei einer Ausführungsform des Erfindung kann dies eines randseitige Stelle des Rotorblatts sein, von welcher aus sich die Halterung quer zu einer Flügelkante des Rotorblatts erstreckt.

Weiter kann, wie es bei einer Ausführungsform der Erfindung vorgesehen ist, die Halterung an zumindest zwei vorzugsweise im Wesentlichen randseitig angeordneten Stellen befestigt, insbesondere angeschraubt oder angeklebt sein.

Gemäß der Erfindung umfasst die Halterung zumindest zwei Abschnitte, welche ineinander schiebbar sind. Werden diese Abschnitte an zwei voneinander beabstandeten Stellen angebracht, kann die Halterung einer Längenänderung zwischen den beiden Stellen, welche beispielsweise aufgrund einer Änderung des Durchmessers hervorgerufen wird, folgen.

Es ist insbesondere vorgesehen, dass die beiden Abschnitte teleskopartig ineinander schiebbar sind.

Es hat sich weiter herausgestellt, dass die Kompensation eines geänderten Durchmessers bei gleichzeitiger exakter Einhaltung der Position der Sender-/Empfängereinheit besonders dann gelingt, wenn die Abschnitte mittels einer Feder und optional eines Dämpfungselementes unter einer Vorspannung stehen.

Vorzugsweise umfasst die Halterung daher einen Federmechanismus, der insbesondere ausgebildet ist, die Halterung wieder auseinander zu schieben, nachdem diese aufgrund einer Verformung des Rotorblatts zusammen gedrückt wurde.

Die Halterung kann insbesondere randseitig an einem Schott oder an dem an das Schott unmittelbar angrenzenden Flügelabschnitt des Rotorblatts befestigt werden.

Der Sender ist vorzugsweise als Lichtquelle, insbesondere als Leuchtdiode bzw. eine Mehrzahl von Leuchtdioden ausgebildet. Diese ist energiesparend und das monochromatische Licht lässt sich besser vom Umgebungslicht unterscheiden, so dass die Gefahr, dass der Empfänger durch Umgebungslicht beeinträchtigt wird, reduziert wird.

Der Reflektor sowie der Referenzreflektor sind vorzugsweise als Array von Tripel-Spiegeln oder Tripel-Prismen, bzw. geeigneten Retroreflektoren ausgebildet.

Bei einer Weiterbildung der Erfindung weisen Sender und/oder Empfänger Mittel zur drahtlosen Übertragung von Messsignalen auf. So ist es nicht erforderlich, im Bereich der Nabe Kabeldurchführungen vorzusehen.

Bei einer Weiterbildung der Erfindung weist die Sender-/Empfängereinheit Mittel zur Stromerzeugung auf, um sich selbst mit Energie zu versorgen. Derartige, nach dem Prinzip des "Energy Harvesting" arbeitende Systeme sind bekannt.

Eine weitere Weiterbildung besteht darin, dass die Reflektoren nicht als Retroreflektoren ausgebildet sind, sondern selbst eine Lichtquelle und Mittel zur Stromerzeugung aufweisen. Dies erhöht die Robustheit gegenüber Verschmutzung, Beschlag und Vereisung. Ein solcher aktiver Reflektor kann entweder durch ein Signal, beispielsweise einem in Richtung des Reflektors gesendeten Lichtpulses, synchron zur Belichtung des Sensors getriggert werden, oder der Sensor synchronisiert die Belichtung des Detektors mit der Pulsfrequenz des aktiven Reflektors.

Es handelt sich dabei beispielsweise um Piezo-elektrisch funktionierende Systeme, welche durch die Drehung des Rotors Energie gewinnen, um diese in Strom umwandeln zu können. Aber auch andere Einrichtungen zur Erzeugung von Energie, wie beispielsweise Photozellen sind denkbar.

So braucht die Sender-/Empfängereinheit, oder auch der aktive Reflektor, nicht mit Batterien bestückt zu werden und es sind ferner keine Kabeldurchführungen zur Stromversorgung erforderlich.

### Beschreibung der Zeichnungen

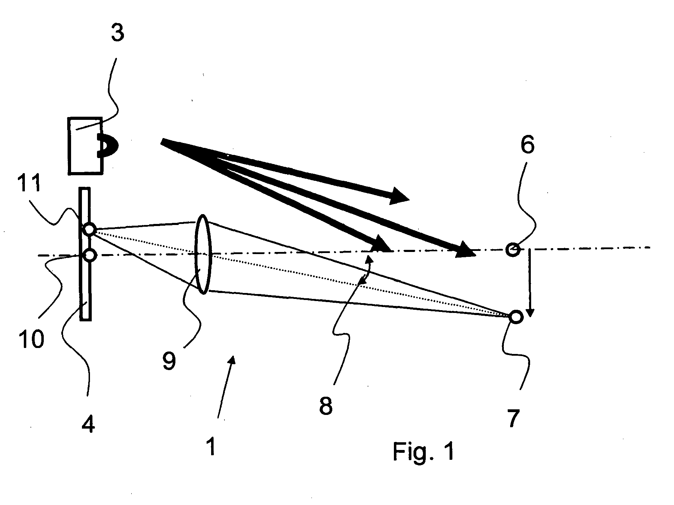

Die Erfindung soll im Folgenden anhand eines schematisch dargestellten Ausführungsbeispiels Bezug nehmend auf die Zeichnungen Fig. 1 bis Fig. 6 näher erläutert werden.

Bezug nehmend auf Fig. 1 soll schematisch ein Messprinzip zur Bestimmung der Verformung eines Rotorblatts erläutert werden.

Schematisch dargestellt ist eine Einrichtung zur Messung der Verformung eines Rotorblatts 1.

Die Einrichtung zur Messung der Verformung eines Rotorblatts 1 umfasst einen Sender 3, hier in Form einer Leuchtdiode, sowie einen Empfänger 4, hier in Form eines CCD- oder CMOS Empfängers.

Über den Sender 3 wird Licht abgestrahlt, welches von einem (oder mehreren) am Rotorblatt angeordneten Retroreflektor reflektiert wird.

Hier dargestellt ist im unbelasteten Zustand eine Reflektorposition 1, welche mit Bezugszeichen 6 bezeichnet ist. In dieser Position liegt der Retroreflektor genau mittig gegenüber dem Empfänger 4. Die Position des Lichtpunktes im unbelasteten Zustand ist mit Bezugszeichen 10 gekennzeichnet.

Im belasteten Zustand, für den der Strahlengang eingezeichnet ist, verschiebt sich die Position des Retroreflektor auf die mit Bezugszeichen 7 bezeichnete Position. In der Folge wandert der über einen Linse 9 auf den Empfänger projizierte Lichtpunkt auf die mit Bezugszeichen 11 bezeichnete Position. Der Reflektionswinkel 8 kann so bestimmt werden und anhand dieses Winkels und des bekannten Abstands zum Retroreflektor direkt die Verformung des Rotorblatts an der Stelle des Retroreflektors oder der Retroreflektoren berechnet werden.

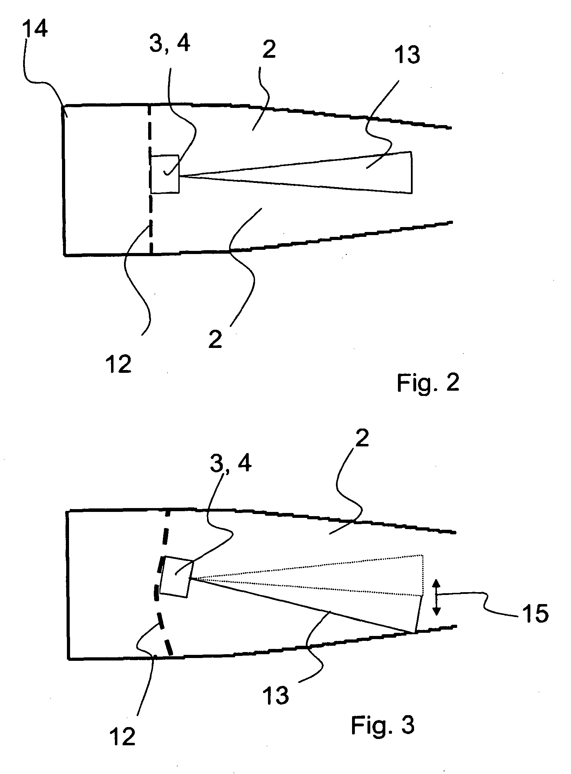

Fig. 2 zeigt, schematisch dargestellt, das Prinzip der an dem Schott (Plattform) 12 eines Rotorblatts angebrachten Sender-/Empfängereinheit 3, 4, welche einen Lichtkegel, der den Messbereich 13 definiert, auf das Rotorblatt 2 abstrahlt. Innerhalb des recht breiten Messbereiches 13 ist sichergestellt, dass sich der zurück reflektierte Lichtpunkt noch auf dem als Flächensensor ausgebildeten Empfänger der Sender-/Empfängereinheit befindet.

Das Licht wird von einem am Rotorblatt 2 angeordneten Reflektor, insbesondere einem Tripel-Spiegel, einem TripelPrisma oder einem Array dieser Elemente zurück reflektiert und die Position des Lichtpunktes kann durch den in der Sender-/Empfängereinheit vorhandenen Flächensensor (nicht dargestellt), insbesondere einen CCD-Chip oder CMOS-Chips, bestimmt werden. So können bereits kleine
Winkelabweichungen des Reflektors, welche durch eine Verformung, insbesondere eine Durchbiegung des
Rotorblatts 2 aufgrund der Windlast, hervorgerufen werden, bestimmt werden.

Die Sender-/Empfängereinheit 3, 4 ist in der Regel am Schott (Plattform) 12 angebracht, welches den in der Regel kreiszylinderförmig ausgebildeten Flansch 14 verschließt. In diesem nabennahen Bereich des Rotorblatts ist in der Regel keine flügelförmige Form vorgesehen. Bei einer Verformung des Rotorblatts 2 unter Belastung erfährt der Bereich im Flansch eine Änderung der Querschnittsform derart, dass sich der Bereich elliptisch verformt.

Bei einer alternativen Ausführungsform der Erfindung (nicht dargestellt) sitzt der Sender an der Stelle des Reflektors. Es ist ersichtlich, dass sich so das in Fig. 1 dargestellte Grundprinzip nicht ändert.

Fig. 3 zeigt als Prinzipskizze die Verformung des Schotts 12 bei Belastung, welche zu einer Verdrehung, also zu einer Winkelabweichung aber auch lateralen Verschiebung der Sender-/Empfängereinheit 3, 4 gegenüber der Position im unbelasteten Zustand führt. Zu sehen ist, dass der Messbereich 13 nicht mehr genau mit der Achse des Rotorblatts 2 übereinstimmt, sondern gewandert ist. Die Richtungsänderung ist mit dem Pfeil 15 dargestellt. Es versteht sich, dass die hier dargestellten Verformungen stark übertrieben dargestellt sind.

Der Reflektor (nicht dargestellt) befindet sich in der Regel zwar immer noch im Messbereich 13, allerdings kommt es durch die Verdrehung der Sender-/Empfängereinheit 3, 4 und dem damit verbundenen Winkelfehler zu einem Messfehler.

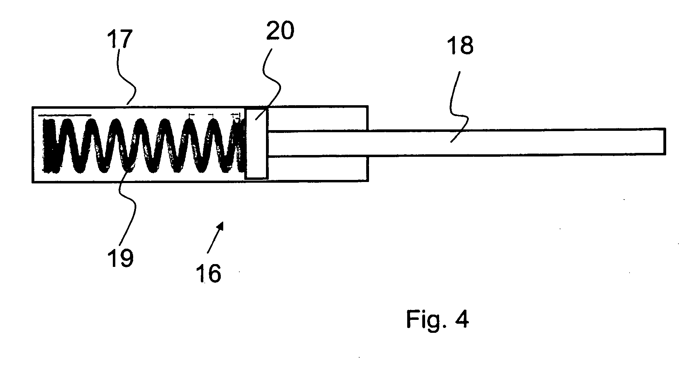

Fig. 4 zeigt, schematisch dargestellt, eine erfindungsgemäße Halterung für eine Sender-/Empfängereinheit.

Die Halterung 16 umfasst einen ersten Abschnitt 17, welcher ein Gehäuse zur Aufnahme einer Feder 19 definiert.

Ein zweiter Abschnitt 18 umfasst einen Federteller 20 und ist in den ersten Abschnitt 17 schiebbar. Die Halterung 16 kann so ineinander geschoben werden und Längenänderungen der randseitigen Befestigungsstellen (nicht dargestellt) kompensieren.

Vorzugsweise wird die Halterung 16 an ihrem randseitigen Stellen über Befestigungspunkte wie Bohrungen (nicht dargestellt) angebracht.

Die an dem Federteller 20 angreifende Feder 19 hält die Halterung 16 zumindest im zusammen geschobenen Zustand unter Vorspannung und sorgt dafür, dass sich die Halterung selbstständig auseinander schiebt, wenn sich der Durchmesser des Abschnitts am Rotorblatt, an welchem die Halterung 16 angebracht ist, wieder vergrößert.

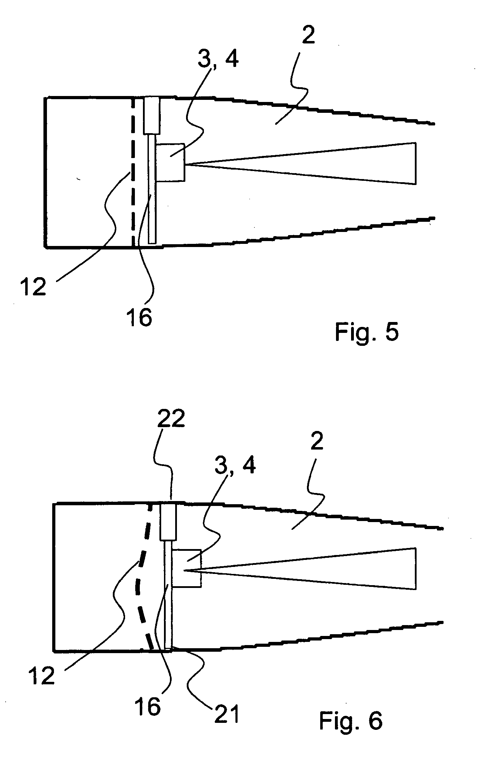

Fig. 5 zeigt als Prinzipsskizze und schematisch dargestellt die in Fig. 4 dargestellte Halterung 16 in eingebautem Zustand.

Die Halterung 16 ist an zwei im Wesentlichen randseitig angeordneten Befestigungspunkten an dem Schott 12 eines Rotorblatts 2 angebracht.

Das Schott 12 ist in dieser Prinzipsskizze im unbelasteten Zustand dargestellt.

An der Halterung 16 ist in einem mittigen Bereich eine Sender-/Empfängereinheit 3, 4 angebracht, welche insbesondere eine Leuchtdiode und einen Flächensensor umfasst und welche auf einen Tripel-Spiegel oder ein Tripel-Prisma (nicht dargestellt) ausgerichtet ist.

Fig. 6 zeigt die in Fig. 5 dargestellte Einbauposition im belasteten Zustand.

Zu erkennen ist, dass das Schott 12 sich aufgrund einer elliptischen Verformung des Flanschbereiches des Rotorblatts verformt hat und sich damit der Abstand der beiden Befestigungspunkte der Halterung 16 reduziert.

Wäre nun die Sender-/Empfängereinheit 3, 4 unmittelbar am Schott 12 befestigt würde sich, wie in Fig. 3 dargestellt, zumindest ein Winkelfehler ergeben.

An den randseitigen Befestigungspunkten 21, 22 ist kein Winkelfehler zu erwarten.

Insbesondere liegt, wie es bei einer bevorzugten Ausführungsform der Erfindung vorgesehen ist, einer der Befestigungspunkte im Koordinatenursprung des Messsystems.

Dies könnte in diesem Ausführungsbeispiel der Befestigungspunkt 21 oder 22 sein.

So kann durch die Halterung, welche Längenänderungen zwischen den Befestigungspunkten 21, 22 folgt, die Verformung in Bezug auf alle Freiheitsgrade kompensiert werden kann. Es ändert sich somit gegenüber dem Bezugspunkt weder der Abstand noch die Ausrichtung der Sender-/Empfängereinheit.

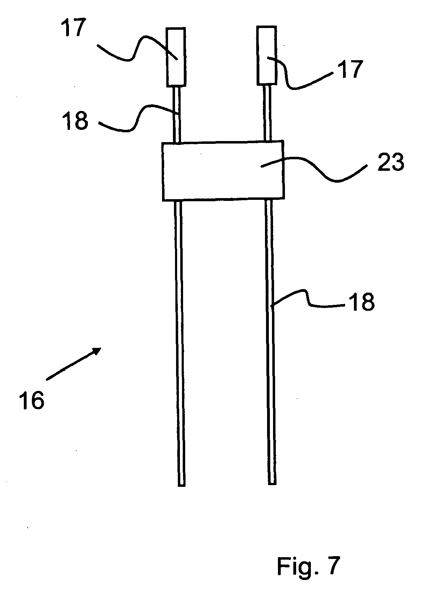

Fig. 7 zeigt eine Halterung 16 gemäß einer weiteren Ausführungsform der Erfindung.

Im Unterschied zu Fig. 4 weist diese Ausführungsform der Erfindung zwei parallel angeordnete Teleskopstangen, jeweils bestehend aus erstem Abschnitt 17 und zweiten Abschnitt 18, auf.

Auch diese Halterung kann entsprechend der in Fig. 4 dargestellten Halterung über randseitige Befestigungsmittel (nicht dargestellt) am Rotorblatt befestigt werden.

Auf einem Abschnitt der Teleskopstange, hier auf dem zweiten Abschnitt 18, ist eine Befestigungsplatte 23 angebracht, an welcher eine Sender- und/oder Empfängereinheit befestigt werden kann.

Diese Ausführungsform hat den Vorteil, dass durch die zwei parallel vorhandenen zusammenschiebbaren Halterungselemente die Befestigungsplatte 23 einfach montiert werden kann, ohne dass die Gefahr besteht, dass diese sich relativ zu den Teleskopstangen verdreht.

Durch die Erfindung kann die Genauigkeit eines gattungsbildenden Systems zur Messung der Durchbiegung eines Rotorblatts signifikant erhöht werden.

### Bezugszeichenliste:

- 1: Einrichtung zur Messung der Verformung eines Rotorblatts
- 2: Rotorblatt
- 3: Sender
- 4: Empfänger
- 5: Reflektor
- 6: Reflektorposition 1
- 7: Reflektorposition 2
- 8: Reflektionswinkel
- 9: Linse
- 10: Empfängerposition 1
- 11: Empfängerposition 2
- 12: Schott (= Plattform)
- 13: Messbereich
- 14: Flansch
- 15: Pfeil
- 16: Halterung
- 17: 1. Abschnitt
- 18: 2. Abschnitt
- 19: Feder
- 20: Federteller
- 21: Befestigungspunkt
- 22: Befestigungspunkt
- 23.: Befestigungsplatte

## Patentansprüche

1. Einrichtung zur Messung der Verformung eines Rotorblatts, insbesondere eines Rotorblatts einer Windkraftanlage, mit einer Einrichtung zur Messung der Verformung bei Belastung,
umfassend zumindest einen am Rotorblatt angeordneten Sender und zumindest einen am Rotorblatt angeordneten Empfänger ,
wobei Sender und/oder Empfänger über eine Halterung angebracht sind, **dadurch gekennzeichnet, dass**
die Halterung zumindest zwei Abschnitte umfasst, welche ineinander schiebbar sind und welche jeweils am Rotorblatt derart befestigt sind, dass die Halterung Änderungen des Durchmessers des Rotorblatts im Bereich der Befestigungsstelle folgen kann, ohne dass sich dabei die Position des Senders oder Empfängers ändert, so dass eine Verformung des Rotorblatts in diesem Bereich kompensierbar ist.

2. Einrichtung zur Messung der Verformung eines Rotorblatts nach Anspruch 1, **dadurch gekennzeichnet, dass** die Halterung einen Federmechanismus umfasst.

3. Einrichtung zur Messung der Verformung eines Rotorblatts nach einem der vorstehenden Ansprüche, **dadurch gekennzeichnet, dass** die Halterung an zumindest zwei, vorzugsweise im Wesentlichen randseitig angeordneten, Stellen befestigt ist.

4. Einrichtung zur Messung der Verformung eines Rotorblatts nach einem der vorstehenden Ansprüche, **dadurch gekennzeichnet, dass** die Abschnitte teleskopartig ineinander schiebbar sind.

5. Einrichtung zur Messung der Verformung eines Rotorblatts nach dem vorstehenden Anspruch, **dadurch gekennzeichnet, dass** die Abschnitte mittels einer Feder gespannt sind.

6. Einrichtung zur Messung der Verformung eines Rotorblatts nach einem der vorstehenden Ansprüche, **dadurch gekennzeichnet, dass** der Sender und/oder Empfänger an einer zwischen Nabe und Rotorblatt liegenden Plattform angeordnet ist.

7. Einrichtung zur Messung der Verformung eines Rotorblatts nach einem der vorstehenden Ansprüche, **dadurch gekennzeichnet, dass** der Sender als Lichtquelle, insbesondere als Laserdiode oder Leuchtdiode ausgebildet ist.

8. Einrichtung zur Messung der Verformung eines Rotorblatts nach einem der vorstehenden Ansprüche, **dadurch gekennzeichnet, dass** ein Reflektor vorgesehen ist, wobei der Reflektor als Tripelspiegel, Tripelprisma, Array von Tripelspiegel, Array von Tripelprismen, oder als anderer Retroreflektor ausgebildet ist.

9. Einrichtung zur Messung der Verformung eines Rotorblatts nach einem der vorstehenden Ansprüche, **dadurch gekennzeichnet, dass** der Empfänger als optischer Flächensensor, insbesondere als CCD-Sensor oder CMOS Sensor, ausgebildet ist.

10. Einrichtung zur Messung der Verformung eines Rotorblatts nach einem der vorstehenden Ansprüche, **dadurch gekennzeichnet, dass** Sender und/oder Empfänger Mittel zur drahtlosen Übertragung von Messsignalen aufweisen.

11. Einrichtung zur Messung der Verformung eines Rotorblatts nach einem der vorstehenden Ansprüche, **dadurch gekennzeichnet, dass** Sender und/oder Empfänger Mittel zur Stromerzeugung aufweisen, um mit Energie versorgt zu werden und/oder dass die Reflektoren ein Leuchtmittel und ein Mittel zur Stromerzeugung aufweisen, um mit Energie versorgt zu werden und /oder dass die Reflektoren zusätzlich oder ausschließlich Lichtquellen enthalten.

## Claims

1. Device for measuring the deformation of a rotor blade, in particular of the rotor blade of a wind turbine, with a device for measuring the deformation under load, comprising at least one transmitter mounted on the rotor blade and at least one receiver mounted on the rotor blade, whereby the transmitter and/or receiver are mounted by means of a holding device,
**characterized in that**
the holding device comprises at least two sections which can slide into each other and each of which are mounted on the rotor blade in such a way that the holding device can follow changes in the diameter of the rotor blade in the area of the mounting point, without the position of the transmitter or receiver changing, so that a deformation of the rotor blade in this area can be compensated.

2. Device for measuring the deformation of a rotor blade in accordance with Claim 1, **characterized in that** the holding device comprises a spring mechanism.

3. Device for measuring the deformation of a rotor blade in accordance with one of the above-mentioned Claims, **characterized in that** the holding device is secured at a minimum of two points, preferably essentially located at the edge.

4. Device for measuring the deformation of a rotor blade in accordance with one of the above-mentioned Claims, **characterized in that** the sections can slide telescopically into each other.

5. Device for measuring the deformation of a rotor blade in accordance with one of the above-mentioned Claims, **characterized in that** the sections are tensioned by means of a spring.

6. Device for measuring the deformation of a rotor blade in accordance with one of the above-mentioned Claims, **characterized in that** the transmitter and/or receiver are located on a platform located between the hub and the rotor blade.

7. Device for measuring the deformation of a rotor blade in accordance with one of the above Claims, **characterized in that** the transmitter is designed as a light source, in particular as a laser diode or as a light-emitting diode.

8. Device for measuring the deformation of a rotor blade in accordance with one of the above Claims, **characterized in that** a reflector is provided for, said reflector being designed as a triple mirror, a triple prism, an array of triple mirrors, an array of triple prisms, or as another type of retroreflector.

9. Device for measuring the deformation of a rotor blade in accordance with one of the above Claims, **characterized in that** the receiver is designed as an optical area sensor, in particular as a CCD sensor or as a CMOS sensor.

10. Device for measuring the deformation of a rotor blade in accordance with one of the above-mentioned Claims, **characterized in that** the transmitter and/or receiver possess means for the wireless transmission of measuring signals.

11. Device for measuring the deformation of a rotor blade in accordance with one of the above-mentioned Claims, **characterized in that** the transmitter and/or receiver possess means for generating electricity in order to be supplied with energy and/or that the reflectors possess a lamp and a means for generating electricity in order to be supplied with energy, and/or that the reflectors additionally or exclusively contain light sources.

## Revendications

1. Dispositif de mesure de la déformation d'une pale de rotor, en particulier d'une pale de rotor d'une centrale éolienne, avec un dispositif de mesure de la déformation en cas de charge,
comprenant au moins un émetteur disposé sur la pale de rotor et au moins un récepteur disposé sur la pale de rotor,
l'émetteur et/ou le récepteur étant installés sur un support,
**caractérisé en ce que**
le support comprend au moins deux parties qui peuvent être poussées l'une dans l'autre et qui sont chacune fixées sur la pale de rotor de telle sorte que la fixation puisse suivre les modifications du diamètre de la pale de rotor dans la zone du site de fixation, sans que cela ne modifie la position de l'émetteur ou du récepteur de sorte qu'une déformation de la pale de rotor peut être compensée dans cette zone.

2. Dispositif de mesure de la déformation d'une pale de rotor selon la revendication 1, **caractérisé en ce que** le support comprend un mécanisme de ressort.

3. Dispositif de mesure de la déformation d'une pale de rotor selon l'une des revendications précédentes, **caractérisé en ce que** le support est fixé sur au moins deux sites, de préférence situés essentiellement sur le bord.

4. Dispositif de mesure de la déformation d'une pale de rotor selon l'une des revendications précédentes, **caractérisé en ce que** les parties peuvent être poussées l'une dans l'autre de manière télescopique.

5. Dispositif de mesure de la déformation d'une pale de rotor selon l'une des revendications précédentes, **caractérisé en ce que** les parties sont étirées à l'aide d'un ressort.

6. Dispositif de mesure de la déformation d'une pale de rotor selon l'une des revendications précédentes, **caractérisé en ce que** l'émetteur et/ou le récepteur sont disposés sur une plateforme située entre le moyeu et la pale de rotor.

7. Dispositif de mesure de la déformation d'une pale de rotor selon l'une des revendications précédentes, **caractérisé en ce que** l'émetteur se présente sous la forme d'une source lumineuse, en particulier sous la forme d'une diode laser ou d'une diode électroluminescente.

8. Dispositif de mesure de la déformation d'une pale de rotor selon l'une des revendications précédentes, **caractérisé en ce qu'**un réflecteur est prévu, le réflecteur se présentant sous la forme d'un réflecteur à prisme, d'un triple prisme, d'un ensemble de réflecteurs à prisme, d'un ensemble de triples prismes ou sous la forme d'un autre rétroréflecteur.

9. Dispositif de mesure de la déformation d'une pale de rotor selon l'une des revendications précédentes, **caractérisé en ce que** le récepteur se présente sous la forme d'un détecteur de surfaces optique, en particulier sous la forme d'un détecteur CCD ou d'un détecteur CMOS.

10. Dispositif de mesure de la déformation d'une pale de rotor selon l'une des revendications précédentes, **caractérisé en ce que** l'émetteur et/ou le récepteur présentent des moyens pour la transmission sans fil de signaux de mesure.

11. Dispositif de mesure de la déformation d'une pale de rotor selon l'une des revendications précédentes, **caractérisé en ce que** l'émetteur et/ou le récepteur présentent des moyens de production d'électricité pour être alimentés en énergie et/ou **en ce que** les réflecteurs présentent une lampe et un moyen de production d'électricité pour être alimentés en énergie et/ou **en ce que** les réflecteurs comprennent de manière complémentaire ou exclusive des sources lumineuses.
